# EUROPÄISCHE PATENTSCHRIFT

(11) **EP 3 709 833 B1**
(45) Veröffentlichungstag und Bekanntmachung des Hinweises auf die Patenterteilung: **07.09.2022**
(21) Anmeldenummer: 19712160.1
(22) Anmeldetag: 14.03.2019
(51) Int. Cl.: A44B 18/00

(54) **HAFTVERSCHLUSSTEIL**
HOOK AND LOOP CLOSURE PART
PIÈCE D'ATTACHE DE FIXATION

(30) Priorität: 17.03.2018 DE 102018002180
(43) Veröffentlichungstag der Anmeldung: 23.09.2020
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2019/056498
(87) Internationale Veröffentlichungsnummer: WO 2019/179883

(56) Entgegenhaltungen:
- EP-A1- 2 269 480
- EP-A1- 2 684 480
- DE-A1-102004 015 321
- FR-A2- 2 566 316
- US-A- 3 717 908

## Beschreibung

Die Erfindung betrifft ein Haftverschlussteil, mit einem ersten Trägerband mit auf diesem auf einer Seite angeordneten Verhakungselementen und mit einem zweiten Trägerband, das mit dem ersten Trägerband verbunden auf seiner den Verhakungselementen abgewandten Seite ein Verbindungsmittel aufweist, wobei das zweite Trägerband breiter als das erste Trägerband ist und mit mindestens einem freien Seitenrandbereich über den benachbarten Längsrand des ersten Trägerbandes vorsteht und wobei die beiden Trägerbänder entlang und quer zu ihrer Längsausrichtung biegbar sind, dadurch gekennzeichnet,dass zumindest ein freier Seitenrandbereich des zweiten Trägerbandes derart mit einer Widerstandsschwächung versehen ist, dass das Biegen der beiden Trägerbänder quer zu ihrer Längsausrichtung erleichtert ist;dass die jeweilige Widerstandsschwächung von erstem und zweitem Trägerband die Verhakungselemente des ersten Trägerbandes in inselartig angeordnete Haftsegmente unterteilt, die sich in Hintereinanderanordnung an einer jeweiligen Biegelinie ausrichten;dass sich die Verhakungselemente in einem Längsstreifen durchgehend an der zuordenbaren Widerstandsschwächung vorbei von Haftsegment zu Haftsegment entlang der Biegelinie erstrecken;dass die jeweilige Widerstandsschwächung aus mindestens einer Ausnehmung in mindestens einem Seitenrandbereich des zweiten Trägerbandes gebildet ist; und dass die Ausnehmungen gleich ausgebildet sind und eine sich vom jeweiligen Längsrand nach innen verjüngende V-Form besitzen.

Haftverschlussteile haben sich auf vielen Gebieten als eine lösbare und funktionssichere Verbindungs- und Verschlusstechnik bewährt. Bei Einsätzen für Flug- oder Fahrzeugsitze dienen sie unter anderem dazu, Sitzbezüge an Schaumkörperteilen, bestehend aus einem Formschaum, zu befestigen, wobei die jeweils einen Haftverschlussteile in das Polsterschaummaterial beim Herstellen des jeweiligen Sitzes mit eingeschäumt werden und jeweilige andere Haftverschlussteile mit den korrespondierenden Verhakungselementen am Polsterbezugsmaterial festgelegt, insbesondere festgenäht werden. Bei der Herstellung der Schaumkörperteile werden die Haftverschlussteile in sogenannte Aufnahmepfeifen einer Einschäumform eingelegt, und durch Anbringen von Schaummaterial in die freien Querschnitte der Einschäumform, vorzugsweise durch Einbringen von Polyurethanschaum (PU-Schaum), werden die Haftverschlussteile beim Einschäumvorgang an den Schaumkörperteilen befestigt. Das Dokument DE 10 2004 015 321 A1 offenbart ein durch einen Einschäumvorgang an Schaumkörperteilen zu befestigendes Haftverschlussteil der eingangs genannten Gattung.

Bei dem bekannten Haftverschlussteil sind sowohl das Trägerband der Verhakungselemente als auch das zweite Trägerband aus einem spritzgegossenen Kunststoffprofil gebildet. Der aus den Bändern gebildete flächige Verbund besitzt gegen Biegung, hauptsächlich in der Bandebene, einen verhältnismäßig hohen Widerstand. Wenn sich aufgrund der Formgebung der Schaumkörperteile gekrümmte Nahtverläufe ergeben, längs denen Haftverschlussteile einzuschäumen sind, dann ist man gezwungen, anstelle eines durchgehenden, langen Haftverschlussteils in Biegungsbereichen mehrere Haftverschlussteile kürzerer Länge vorzusehen. Dies führt zumindest zu einer nachteiligen Erhöhung des Arbeitsaufwandes für die Befestigung der Haftverschlussteile beim Einschäumvorgang.

Weitere Haftverschlussteile gehen aus der EP 2 269 480 A1, der EP 2 684 480 A1, der US 3 717 908 A und der FR 2 566 316 A2 hervor.

Im Hinblick auf diese Problematik stellt sich die Erfindung die Aufgabe, ein Haftverschlussteil der eingangs genannten Gattung zur Verfügung zu stellen, das eine Festlegung am betreffenden Schaumkörperteil auch im gekrümmten Verlauf beim Einschäumvorgang ermöglicht.

Erfindungsgemäß ist diese Aufgabe durch ein Haftverschlussteil gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass zumindest ein freier Seitenrandbereich des zweiten Trägerbandes derart mit einer Widerstandsschwächung versehen ist, dass das Biegen der beiden Trägerbänder quer zu ihrer Längsausrichtung erleichtert ist; dass die jeweilige Widerstandsschwächung von erstem und zweitem Trägerband die Verhakungselemente des ersten Trägerbandes in inselartig angeordnete Haftsegmente unterteilt, die sich in Hintereinanderanordnung an einer jeweiligen Biegelinie ausrichten; dass sich die Verhakungselemente in einem Längsstreifen durchgehend an der zuordenbaren Widerstandsschwächung vorbei von Haftsegment zu Haftsegment entlang der Biegelinie erstrecken; dass die jeweilige Widerstandsschwächung aus mindestens einer Ausnehmung in mindestens einem Seitenrandbereich des zweiten Trägerbandes gebildet ist; und dass die Ausnehmungen gleich ausgebildet sind und eine sich vom jeweiligen Längsrand nach innen verjüngende V-Form besitzen. Die dergestalt erreichte Verringerung der Biegesteifigkeit der erfindungsgemäßen Haftverschlussteile ermöglicht trotz nicht geradlinigem Verlauf der Verbindungsbereiche zwischen Polsterbezugsmaterial und betreffendem Schaumkörperteil den Einsatz langgestreckter, dem Nahtverlauf folgender Haftverschlussteile.

Mit Vorteil ist die Widerstandsschwächung zumindest an demjenigen Seitenrandbereich des zweiten Trägerbandes angeordnet, in dessen Richtung die beiden Trägerbänder gebogen sind.

Die Anordnung kann hierbei mit Vorteil so getroffen sein, dass das zweite Trägerband auf beiden Längsrändern des ersten Trägerbandes mit jeweils einem Seitenrandbereich vorsteht und dass beide Seitenrandbereiche eine gleiche Flächenausdehnung besitzen und mit je einer gleichwirkenden Widerstandsschwächung versehen sind.

Ein besonders günstiges Biegeverhalten ist erreichbar, wenn die jeweilige Widerstandsschwächung eines Seitenrandbereichs des zweiten Trägerbandes in das erste Trägerband kontinuierlich mit übergeht.

Mit besonderem Vorteil kann die Anordnung so getroffen sein, dass die jeweilige Widerstandsschwächung von erstem und zweitem Trägerband in einer Biegelinie ausmündet, die die Längsachse zumindest des ersten Trägerbandes definiert.

Die Anordnung kann hierbei mit besonderem Vorteil so getroffen sein, dass die jeweilige Widerstandsschwächung von erstem und zweitem Trägerband die Verhakungselemente des ersten Trägerbandes in Haftsegmente unterteilt, die sich in Hintereinanderanordnung an der jeweiligen Biegelinie ausrichten.

Für die Funktionsfähigkeit der Haftverschlussteile ist es unabdingbar, dass die Verhakungselemente beim Einschäumvorgang gegen das Eindringen von Schaummaterial geschützt sind. Bei vorteilhaften Ausführungsbeispielen sind zur Verhinderung, dass die Verhakungselemente durch eindringendes Schaummaterial verklebt und dadurch funktionsunfähig werden, die beiden Trägerbänder vonseiten der Verhakungselemente mit einer vorzugsweise selbstklebenden Abdeckfolie versehen, nach deren Entfernen die Verhakungselemente für einen Verhakungseingriff freigelegt sind.

Ein besonders sicherer Schutz der Verhakungselemente gegen Eindringen von Schaummaterial ist erreichbar, wenn zwischen der Abdeckfolie und den Verhakungselementen des ersten Trägerbandes eine Schaumbarriere eingelegt ist, die zumindest teilweise in die Abstände zwischen den Verhakungselementen eingreift. Eine solche, zusätzlich zur Abdeckfolie wirkende Schaumbarriere kann durch einen Teppichflor gebildet sein, dessen Träger an der Abdeckfolie anliegt und dessen Florfäden für die Verhakungselemente eine Umhüllung bilden.

Bei besonders vorteilhaften Ausführungsbeispielen ist, von zumindest einem Längsrand des zweiten Trägerbandes ausgehend, eine Folge von Ausnehmungen ausgebildet, die sich zur Bandlängsrichtung querverlaufend in beiden Trägerbändern bis in die Nähe der Bandmitte respektive der Biegelinie erstrecken.

Eine besondere Erhöhung der Flexibilität ergibt sich, wenn, von beiden Längsrändern des zweiten Trägerbandes ausgehend, je eine Folge von Ausnehmungen gebildet ist.

Hierbei kann die Anordnung mit besonderem Vorteil so getroffen sein, dass die Begrenzungsränder der jeweiligen V-förmigen Ausnehmung einen Winkel von 20° bis 30°, vorzugsweise von 25°, miteinander einschließen.

Mit besonderem Vorteil kann die Anordnung hierbei so getroffen sein, dass die Ausnehmungen zueinander äquidistant in Abständen angeordnet sind, die vorzugsweise kleiner sind als die Breite des zweiten Trägerbandes.

Ein besonders günstiges Biegeverhalten ist erreichbar, wenn die Ausnehmungen der einen Folge auf die Ausnehmungen der anderen Folge ausgerichtet sind.

Bei besonders vorteilhaften Ausführungsbeispielen ist die Anordnung derart getroffen, dass die Ausnehmungen vor der Bandmitte der Trägerbänder in einem Abstand enden, der weniger als 1/8, vorzugsweise weniger als 1/10, der Breite des zweiten Trägerbandes beträgt.

Mit besonderem Vorteil können die Ausnehmungen aus Einschnitten oder Ausstanzungen in das zuordenbare Bandmaterial gebildet sein, die das Material vollständig durchgreifen.

Mit Vorteil kann hierbei die Anordnung so getroffen sein, dass die in Richtung der Biegelinie sich verjüngenden V-förmigen Ausnehmungen sich im Biegefall auf einer Seite zusehends schließen, bis die die V-förmigen Ausnehmungen begrenzenden Wandteile der beiden Trägerbänder in Anlage miteinander kommen, und dass, während sich auf einer Seite beim Biegen in einer Richtung die zuordenbaren V-förmigen Ausnehmungen schließen, die jeweiligen Ausnehmungen auf der gegenüberliegenden Seite der beiden Trägerbänder sich entsprechend aufspreizen.

Gemäß dem Patentanspruch 21 ist Gegenstand der Erfindung auch die Verwendung eines Haftverschlussteils nach einem der Ansprüche 1 bis 20 in einer Schäumform, insbesondere zum Herstellen von Fahrzeug-Sitzpolstern, mit einer Aufnahmepfeife, in die die Haftverschlussteile abgedeckt mit der Abdeckfolie einlegbar sind, wobei nach Verbinden des Formschaums mit dem Verbindungsmittel unter Bildung zumindest eines Teils des Sitzpolsters und nach Entnahme aus der Schäumform nach Entfernen der Abdeckfolie die Verhakungselemente freigelegt sind.

Nachstehend ist die Erfindung anhand von in der Zeichnung dargestellten Ausführungsbeispielen im Einzelnen erläutert. Es zeigen:
- Fig. 1: in schematisch vereinfachter und nicht maßstäblicher Darstellung einen Ausschnitt einer Aufnahmepfeife für eine Einschäum-form, wobei in deren Formmulde ein Haftverschlussteil gemäß einem Ausführungsbeispiel der Erfindung eingelegt ist;
- Fig. 2: in entsprechend vereinfachter und in gegenüber einer praktischen Ausführungsform etwa 2,5-fach vergrößerter Darstellung einen Längenabschnitt des Ausführungsbeispiels von Fig. 1, gesehen auf die Bandseite mit den Verhakungselementen und ohne darüberliegende Abdeckfolie;
- Fig. 3: in der Fig. 2 entsprechender Darstellung die Draufsicht des Ausführungsbeispiels, wobei ein gebogener Zustand dargestellt ist;
- Fig. 4: in vereinfachter und nicht maßstäblicher Darstellung ein zweites Ausführungsbeispiel des erfindungsgemäßen Haftverschlussteils, wobei der Zustand vor Anbringen einer Abdeckfolie dargestellt ist;
- Fig. 5: in der Fig. 1 entsprechend schematisch vereinfachter und nicht maßstäblicher Darstellung einen Ausschnitt einer Aufnahmepfeife für eine Einschäumform, wobei in deren Formmulde ein Haftverschlussteil gemäß einem dritten Ausführungsbeispiel der Erfindung eingelegt ist; und
- Fig. 6: in der Fig. 4 entsprechender Darstellung das dritte Ausführungsbeispiel des Haftverschlussteils, wobei der Zustand vor Anbringen der Abdeckfolie dargestellt ist.

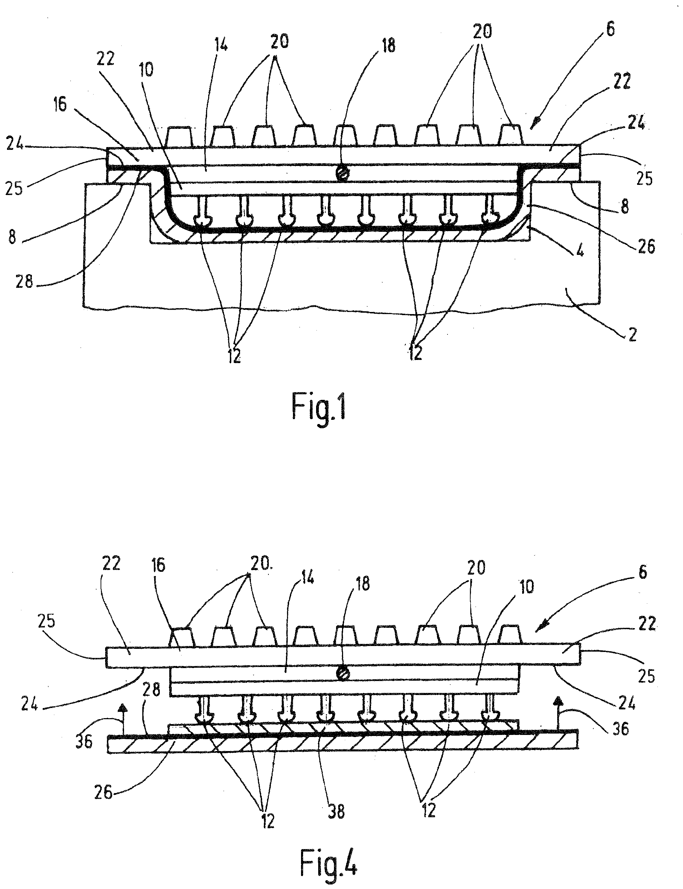

In Fig. 1 ist eine Aufnahmepfeife mit 2 bezeichnet, die Bestandteil einer im Übrigen nicht dargestellten Einschäumform ist. Die Aufnahmepfeife 2 weist eine Formmulde 4 in Form einer Ausnehmung auf, deren freier Querschnitt dem in dieser aufzunehmenden Haftverschlussteil 6 angepasst ist. Entlang der seitlichen Längsränder ist die Formmulde 4 durch ebenflächige Wandteile 8 begrenzt. Das Haftverschlussteil 6 weist ein flächiges Trägerband 10 auf, an dessen einer Seite Verhakungselemente angeordnet sind. Diese sind beim dargestellten Beispiel durch (in der Zeichnung nur teilweise bezifferte) Pilzköpfe 12 gebildet, die sich an vom Trägerband 10 abstehenden Stielen befinden. Hierbei kann es sich um ein sog. Haftverschlusselement handeln, bei dem 200 bis 400 Verhakungselemente und mehr pro cm² am Trägerband 10 vorgesehen sind. Dieses kann durch ein Grundgewebe aus Polyamid mit Stielen aus Polypropylen gebildet sein, an denen die Pilzköpfe 12 durch thermische Bearbeitung ausgebildet sind. Der Träger 10 mit den Pilzköpfen 12 kann auch aus einem spritzgegossenen Kunststoffprofil bestehen. Während beim gezeigten Beispiel die Verhakungselemente durch Pilzköpfe 12 gebildet sind, können die Verhakungselemente auch durch Schlingen oder Schlaufen eines Schlaufenmaterials gebildet sein. Haftverschlusselemente dieser Art mit Pilzköpfen 12 als Verhakungselemente sind unter der Produktbezeichnung Pressotex^{®} und mit Verhakungselementen in Form eines Flauschmaterials unter der Produktbezeichnung Klettostar^{®} jeweils von der Anmelderin auf dem Markt erhältlich.

Das Trägerband 10 ist an seiner von den Verhakungselementen abgewandten Seite über eine Klebstoffschicht 14 mit einem zweiten Trägerband 16 fest verbunden. Die Klebstoffschicht 14 besteht beim vorliegenden Beispiel aus einem feuchtigkeitsvernetzenden, polyurethanhaltigen Klebstoff. In die Klebstoffschicht 14 ist mittig ein Eisendraht 18 eingebettet, der sich über die gesamte, senkrecht zur Zeichnungsebene verlaufende Länge des Haftverschlussteils 6 erstreckt. In Verbindung mit in der Einschäumform befindlichen, nicht gezeigten permanentmagnetischen Elementen bildet der Eisendraht 18 eine magnetische Halteeinrichtung, die das Haftverschlussteil 6 in der Aufnahmepfeife 2 festlegt. Das über die Klebstoffschicht 14 befestigte zweite Trägerband 16 ist ein spritzgegossenes Kunststoffprofil, das an der von der Klebstoffschicht 14 abgewandten Seite angeformte runde Vorsprünge 20 in Form von freistehenden Stäbchen besitzt. Diese bilden ein Verbindungsmittel, das eine gute Anhaftung des Formschaums beim Einschäumvorgang gewährleistet. Wie der Zeichnung entnehmbar ist, hat das zweite Trägerband 16 eine größere Breite als das erste Trägerband 10 und steht mit je einem Seitenrandbereich 22, die die gleiche Breite besitzen, über das erste Trägerband 10 seitlich vor. Mit der den Vorsprüngen 20 abgewandten Seite bilden diese Randbereiche 22 jeweils eine Verbindungszone 24, an der eine Abdeckfolie 26 ablösbar anbringbar ist. Diese ist beim vorliegenden Beispiel durch eine Folie, beispielsweise aus Polyester, gebildet, die in der Art eines Klebebandes mit einem Haftkleber 28 versehen ist, mit dem sie mit ihren Längsrändern an den Verbindungszonen 24 der Seitenrandbereiche des zweiten Trägerbandes 16 ablösbar verklebt ist. Die Fig. 1 zeigt diesen Zustand, bei dem zur Vorbereitung eines Einschäumvorgangs das Haftverschlussteil 6 in die Aufnahmepfeife 2 zusammen mit der Abdeckfolie 26 eingelegt ist, die den gesamten Bereich der Verhakungselemente (Pilzköpfe 12) dicht einschließt und beim Schäumvorgang gegen den Eintritt von Formschaum schützt. Für die spätere Herstellung der Haftverbindung mit dem jeweils korrespondierenden weiteren Haftverschlussteil stehen daher nach Ablösen der Abdeckfolie 26 die Pilzköpfe 12 voll funktionsfähig zur Verfügung.

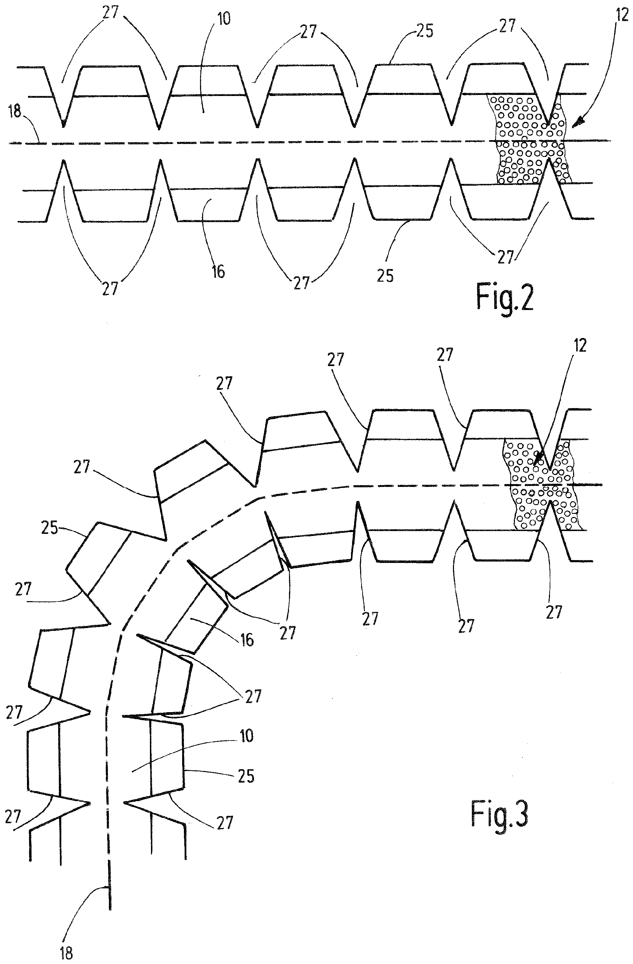

Die Fig. 2 zeigt in Draufsicht einen Längenabschnitt des Ausführungsbeispiels des Haftverschlussteils 6 von Fig. 1 nach Abnahme der ablösbaren Abdeckfolie 26. Wie gezeigt, sind, ausgehend von den mit 25 bezeichneten Längsrändern des zweiten Trägerbandes 16, Ausnehmungen 27 gebildet, die sich in beiden Bändern 16 und 10 in zur Bandlängsrichtung senkrechter Richtung bis in die Nähe der Bandmitte erstrecken. Genauer gesagt, enden die Ausnehmungen 27 jeweils in einem gleichen Abstand von dem in der Bandmitte verlaufenden, eingebetteten Eisendraht 18. Bei dem gezeigten Beispiel beträgt der Abstand zwischen den inneren Enden der Ausnehmungen 27 und der Bandmitte weniger als 1/10 der Breite des zweiten Trägerbandes 16. Die gleich ausgebildeten Ausnehmungen 27 beider seitlicher Folgen sind gleich ausgebildet und zueinander fluchtend angeordnet und weisen jeweils eine V-Form auf, deren Breite sich vom äußeren Längsrand (25 in Fig. 1) nach innen verringert und in einer Spitze endet. Der Abstand der äquidistant angeordneten Ausnehmungen 27 ist gleich groß wie die Breite des zweiten Trägerbandes 16 oder vorzugsweise etwas geringer als diese.

Wie oben erwähnt, besitzt das Haftverschlussteil 6, hauptsächlich wegen der Werkstoffeigenschaft des durch ein Kunststoffprofil gebildeten zweiten Trägerbandes 16, eine verhältnismäßig hohe Steifigkeit gegen Biegen in der Bandebene, d.h. in der Ebene der Fig. 2. Die Ausnehmungen 27 führen zu einer erheblichen Verringerung dieser Steifigkeit und stellen eine ausreichende Flexibilität zur Verfügung, die eine Anordnung des Haftverschlussteils 6 im von der geraden Linie abweichenden Verlauf ermöglicht.

Die Fig. 3 zeigt diesbezüglich das Beispiel eines Längenabschnitts in einem gebogenen Verlauf mit näherungsweise um 90° abgewinkeltem Verlauf der Bandlängsrichtung. Dadurch, dass die Ausnehmungen 27 durch ihre V-Form Materialausschnitte mit an den Längsrändern größerer Weite bilden, stehen an Biegungen, wie in Fig. 3 gezeigt, an der Innenseite Freiräume zur Verfügung, die eine Annäherung der Wände der Ausnehmungen 27 unter Verjüngung der V-Form ermöglichen, während an der Außenseite der Biegung sich die V-Form aufspreizt. Dadurch sind stärkere Biegungen, wie beispielsweise in Fig. 3 gezeigt, ohne Ausbeulen ermöglicht.

Fig. 4 zeigt ein drittes Ausführungsbeispiel, wobei jedoch, anders als in Fig. 1, das Haftverschlussteil in teilgefertigtem Zustand dargestellt ist. Das Ausführungsbeispiel von Fig. 4 entspricht dem Ausführungsbeispiel von Fig. 1 bis 3, abgesehen davon, dass die Abdeckfolie 26 mit ihrem Haftkleber 28 nicht unmittelbar an den Pilzköpfen 12 anliegt, sondern dass auf dem Haftkleber 28 eine Schutzlage 38 aufgelegt ist. Diese ist durch eine Folie, beispielsweise aus Polyester, gebildet, deren Breite der Breite des ersten Trägerbandes 10 entspricht. Bei dem teilgefertigten Zustand der Fig. 4 ist die Abdeckfolie 26 mit der Schutzlage 38 an die Pilzköpfe 12 angelegt, jedoch noch nicht durch Bewegen der Seitenränder der Abdeckfolie 26, wie mit Pfeilen 36 angedeutet, an den Verbindungszonen 24 der Randbereiche 22 des zweiten Trägerbandes 16 angeklebt. Die sich über die gesamte Breite des ersten Trägerbandes 10 erstreckende Schutzlage 38 schützt die Pilzköpfe 12 vor einem Antrag des Haftklebers 28 der Abdeckfolie 26.

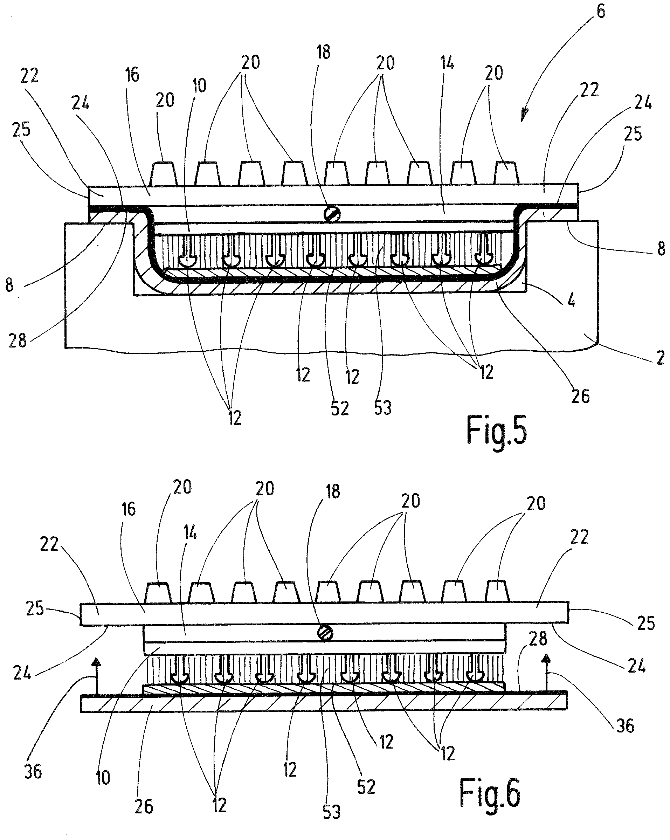

Die Fig. 5 und 6 verdeutlichen ein drittes Ausführungsbeispiel, bei dem, im Unterschied zu den zuvor beschriebenen Ausführungsbeispielen, eine zusätzliche Schaumbarriere zum Schutz der Pilzköpfe 12 vor Eindringen von Formschaum beim Einschäumvorgang vorhanden ist. Diese Schaumbarriere ist durch einen Teppichflor gebildet, dessen Träger 52 anstelle der Schutzlage 38 auf dem Haftkleber 28 der Abdeckfolie 26 aufliegt und mit dieser verklebt ist. Mit seinen Florfäden 53 bildet der Teppichflor eine Umhüllung für die Pilzköpfe 12 als zusätzliche Schaumbarriere. Gleichzeitig sind die Pilzköpfe 12 durch den Träger 52 vor Berührung mit dem Haftkleber 28 geschützt. Die Fig. 6 zeigt, in Entsprechung zur Fig. 4, den teilgefertigten Zustand vor dem Ankleben der Schutzfolie 26 an den Verbindungszonen 24 an den Randbereichen 22 des zweiten Trägerbandes 16.

## Patentansprüche

1. Haftverschlussteil, mit einem ersten Trägerband (10) mit auf diesem auf einer Seite angeordneten Verhakungselementen (12) und mit einem zweiten Trägerband (16), das mit dem ersten Trägerband (10) verbunden auf seiner den Verhakungselementen (12) abgewandten Seite ein Verbindungsmittel (20) aufweist, wobei das zweite Trägerband (16) breiter als das erste Trägerband (10) ist und mit mindestens einem freien Seitenrandbereich (22) über den benachbarten Längsrand des ersten Trägerbandes (10) vorsteht und wobei die beiden Trägerbänder (10, 16) entlang und quer zu ihrer Längsausrichtung biegbar sind,
**dadurch gekennzeichnet,**
**dass** zumindest ein freier Seitenrandbereich (22) des zweiten Trägerbandes (16) derart mit einer Widerstandsschwächung (27) versehen ist, dass das Biegen der beiden Trägerbänder (10, 16) quer zu ihrer Längsausrichtung erleichtert ist;
**dass** die jeweilige Widerstandsschwächung (27) von erstem (10) und zweitem Trägerband (16) die Verhakungselemente (12) des ersten Trägerbandes (10) in inselartig angeordnete Haftsegmente unterteilt, die sich in Hintereinanderanordnung an einer jeweiligen Biegelinie ausrichten;
**dass** sich die Verhakungselemente (12) in einem Längsstreifen durchgehend an der zuordenbaren Widerstandsschwächung (27) vorbei von Haftsegment zu Haftsegment entlang der Biegelinie erstrecken;
**dass** die jeweilige Widerstandsschwächung aus mindestens einer Ausnehmung (27) in mindestens einem Seitenrandbereich (22) des zweiten Trägerbandes (16) gebildet ist; und
**dass** die Ausnehmungen (27) gleich ausgebildet sind und eine sich vom jeweiligen Längsrand (25) nach innen verjüngende V-Form besitzen.

2. Haftverschlussteil nach Anspruch 1, **dadurch gekennzeichnet, dass** die Widerstandsschwächung zumindest an demjenigen Seitenrandbereich (22) des zweiten Trägerbandes (16) angeordnet ist, in dessen Richtung die beiden Trägerbänder (10, 16) gebogen sind.

3. Haftverschlussteil nach Anspruch 1 oder 2, **dadurch gekennzeichnet, dass** das zweite Trägerband (16) auf beiden Längsrändern des ersten Trägerbandes (10) mit jeweils einem Seitenrandbereich (22) vorsteht und dass beide Seitenrandbereiche (22) eine gleiche Flächenausdehnung haben und mit je einer gleichwirkenden Widerstandsschwächung (27) versehen sind.

4. Haftverschlussteil nach Anspruch 3, **dadurch gekennzeichnet, dass** die jeweilige Widerstandsschwächung eines Seitenrandbereichs (22) des zweiten Trägerbandes (16) in das erste Trägerband (10) kontinuierlich mit übergeht.

5. Haftverschlussteil nach Anspruch 3 oder 4, **dadurch gekennzeichnet, dass** die jeweilige Widerstandsschwächung (27) von erstem (10) und zweitem Trägerband (16) in einem vorgegebenen Abstand von einer Biegelinie endet, die die Längsachse (18) zumindest des ersten Trägerbandes (10) definiert.

6. Haftverschlussteil nach einem der vorstehenden Ansprüche, **dadurch gekennzeichnet, dass** die beiden Trägerbänder (10, 16) in die einzelnen inselartigen Haftsegmente unterteilt sind, die an den Stellen der Widerstandsschwächung (27) entlang der Biegelinie über derart gebildete Gelenkstellen benachbart miteinander verbunden sind, dass sowohl die Verhakungselemente (12) als auch das Verbindungsmittel (20) über die zuordenbaren Gelenkstellen hinweg, sich von einem Haftsegment zum benachbarten Haftsegment erstrecken.

7. Haftverschlussteil nach einem der vorstehenden Ansprüche, **dadurch gekennzeichnet, dass** die beiden Trägerbänder (10, 16) vonseiten der Verhakungselemente (12) mit einer vorzugsweise selbstklebenden Abdeckfolie (26) versehen sind, nach deren Entfernen die Verhakungselemente (12) für einen Verhakungseingriff freigelegt sind.

8. Haftverschlussteil nach Anspruch 7, **dadurch gekennzeichnet, dass** zwischen der Abdeckfolie (26) und den Verhakungselementen (12) des ersten Trägerbandes (10) eine Schaumbarriere (52, 53) eingelegt ist, die zumindest teilweise in die Abstände zwischen den Verhakungselementen (12) eingreift.

9. Haftverschlussteil nach einem der vorstehenden Ansprüche, **dadurch gekennzeichnet, dass**, von zumindest einem Längsrand (25) des zweiten Trägerbandes (16) ausgehend, eine Folge von Ausnehmungen (27) ausgebildet ist, die sich zur Bandlängsrichtung quer verlaufend in beiden Trägerbänden (10, 16) bis in die Nähe der Bandmitte (18) respektive der Biegelinie erstrecken.

10. Haftverschlussteil nach Anspruch 9, **dadurch gekennzeichnet, dass**, von den beiden Längsrändern (25) des zweiten Trägerbandes (16) ausgehend, je eine Folge von Ausnehmungen (27) gebildet ist.

11. Haftverschlussteil nach einem der vorstehenden Ansprüche, **dadurch gekennzeichnet, dass** die Begrenzungsränder der jeweiligen V-förmigen Ausnehmung (27) einen Winkel von 20° bis 30°, vorzugsweise von 25°, miteinander einschließen.

12. Haftverschlussteil nach einem der vorstehenden Ansprüche, **dadurch gekennzeichnet, dass** die Ausnehmungen (27) zueinander äquidistant in Abständen angeordnet sind, die vorzugsweise kleiner sind als die Breite des zweiten Trägerbandes (16).

13. Haftverschlussteil nach einem der vorstehenden Ansprüche, **dadurch gekennzeichnet, dass** die Ausnehmungen (27) der einen Folge auf die Ausnehmungen (27) der anderen Folge ausgerichtet sind.

14. Haftverschlussteil nach einem der vorstehenden Ansprüche, **dadurch gekennzeichnet, dass** die Ausnehmungen (27) vor der Bandmitte (18) der Trägerbänder (10, 16) in einem Abstand enden, der weniger als 1/8, vorzugsweise weniger als 1/10, der Breite des zweiten Trägerbandes (16) beträgt.

15. Haftverschlussteil nach einem der vorstehenden Ansprüche, **dadurch gekennzeichnet, dass** die Ausnehmungen (27) aus Einschnitten oder Ausstanzungen in das zuordenbare Bandmaterial gebildet sind, die das Material vollständig durchgreifen.

16. Haftverschlussteil nach einem der vorstehenden Ansprüche, **dadurch gekennzeichnet, dass** die in Richtung der Biegelinie sich verjüngenden V-förmigen Ausnehmungen (27) sich im Biegefall auf einer Seite zusehends schließen, bis die die V-förmigen Ausnehmungen (27) begrenzenden Wandteile der beiden Trägerbänder (10, 16) in Anlage miteinander kommen.

17. Haftverschlussteil nach einem der vorstehenden Ansprüche, **dadurch gekennzeichnet, dass** während sich auf einer Seite beim Biegen in einer Richtung die zuordenbaren V-förmigen Ausnehmungen (27) schließen, die jeweiligen Ausnehmungen (27) auf der gegenüberliegenden Seite der beiden Trägerbänder (10, 16) sich entsprechend aufspreizen.

18. Haftverschlussteil nach einem der vorstehenden Ansprüche, **dadurch gekennzeichnet, dass** die Widerstandsschwächung (27) die beiden Trägerbänder (10, 16) in einzelne Haftsegmente unterteilt, die an der Stelle der Widerstandsschwächung miteinander verbunden sind, und dass sich die Verbindungsmittel (20) über die zuordenbare Widerstandsschwächung hinweg von Haftsegment zu Haftsegment erstrecken.

19. Haftverschlussteil nach einem der vorstehenden Ansprüche, **dadurch gekennzeichnet, dass** das erste Trägerband (10) mit seinen Verbindungsmitteln (20) in einem Längsstreifen zwischen den Haftsegmenten frei von Widerstandsschwächungen ist.

20. Haftverschlussteil nach einem der vorstehenden Ansprüche, **dadurch gekennzeichnet, dass** die Ausnehmungen (27) auf beiden Seiten der Bänder (10, 16) gleich ausgebildet und zueinander fluchtend angeordnet sind und jeweils eine V-Form aufweisen, deren Breite sich vom äußeren Längsrand (25) nach innen verringert und in einer Spitze ausmündet.

21. Verwendung eines Haftverschlussteils nach einem der vorstehenden Ansprüche in einer Schäumform, insbesondere zum Herstellen von Fahrzeug-Sitzpolstern, mit einer Aufnahmepfeife (2), in die die Haftverschlussteile (6) abgedeckt mit der Abdeckfolie (26) einlegbar sind, wobei nach Verbinden des Formschaums mit dem Verbindungsmittel (20) unter Bildung zumindest eines Teils des Sitzpolsters und nach Entnahme aus der Schäumform nach Entfernen der Abdeckfolie (26) die Verhakungselemente (12) freigelegt sind.

## Claims

1. Adhesive closure part, having a first carrier strip (10) with interlocking elements (12) arranged on one side of said strip and having a second carrier strip (16) comprising, connected to the first carrier strip (10), on its side facing away from the interlocking elements (12), a connecting means (20), the second carrier strip (16) being wider than the first carrier strip (10) and protruding over the adjacent longitudinal edge of the first carrier strip (10) with at least one free side edge region (22), and both carrier strips (10, 16) being able to be bent along and transverse to their longitudinal orientation,
**characterised**
**in that** at least one free side edge region (22) of the second carrier strip (16) is provided with weakened resistance (27) such that bending of both carrier strips (10, 16) transverse to their longitudinal orientation is facilitated;
**in that** the respective weakened resistance (27) of the first (10) and second carrier strip (16) subdivides the interlocking elements (12) of the first carrier strip (10) into adhesive segments arranged in the form of islands, which are oriented one behind the other on a respective bending line;
**in that** the interlocking elements (12) extend along the bending line in a longitudinal strip continuously past the assignable weakened resistance (27) from adhesive segment to adhesive segment;
**in that** the respective weakened resistance is formed by at least one recess (27) in at least one side edge region (22) of the second carrier strip (16); and
**in that** the recesses (27) are designed to be identical and have a V-shape tapering inwards from the respective longitudinal edge (25).

2. Adhesive closure part according to claim 1, **characterised in that** the of weakened resistance is arranged at least on the specific side end region (22) of the second carrier strip (16) towards which the two carrier strips (10, 16) are bent.

3. Adhesive closure part according to either claim 1 or claim 2, **characterised in that** the second carrier strip (16) protrudes on both longitudinal edges of the first carrier strip (10) with one side edge region (22) in each case and **in that** both side edge regions (22) have an identical surface area and are equipped with a weakened resistance (27) that has the same effect in each case.

4. Adhesive closure part according to claim 3, **characterised in that** the respective weakened resistance of a side edge region (22) of the second carrier strip (16) transitions continuously into the first carrier strip (10).

5. Adhesive closure part according to either claim 3 or 4, **characterised in that** the respective weakened resistance (27) of the first (10) and second carrier strip (16) ends at a pre-defined distance from a bending line, which defines the longitudinal axis (18) of at least the first carrier strip (10).

6. Adhesive closure part according to any of the preceding claims, **characterised in that** the two carrier strips (10, 16) are subdivided into the individual adhesive segments in the form of islands, which are connected to one another side-by-side at the locations of the weakened resistance (27) along the bending line by means of articulation points that are formed such that both the interlocking elements (12) and the connecting means (20) beyond the assignable articulation points extend from one adhesive segment to the adjacent adhesive segment.

7. Adhesive closure part according to any of the preceding claims, **characterised in that** the two carrier strips (10, 16) are equipped with a preferably self-adhesive covering film (26) on the side of the interlocking elements (12), which film, when removed, exposes the interlocking elements (12) for interlocking engagement.

8. Adhesive closure part according to claim 7, **characterised in that** a foam barrier (52, 53) is inserted between the covering film (26) and the interlocking elements (12) of the first carrier strip (10), said barrier engaging at least partially in the intervals between the interlocking elements (12).

9. Adhesive closure part according to any of the preceding claims, **characterised in that**, starting from at least one longitudinal edge (25) of the second carrier strip (16), a sequence of recesses (27) is formed, said recesses extending, running transversely to the longitudinal direction of the strip in two carrier strips (10, 16) to the vicinity of the centre (18) of the strip or the bending line respectively.

10. Adhesive closure part according to claim 9, **characterised in that**, starting from the two longitudinal edges (25) of the second carrier strip (16), a sequence of recesses (27) is formed in each case.

11. Adhesive closure part according to any of the preceding claims, **characterised in that** the boundary edges of the respective V-shaped recess (27) enclose an angle of 20° to 30°, preferably 25° between said edges.

12. Adhesive closure part according to any of the preceding claims, **characterised in that** the recesses (27) are arranged at intervals that are equidistant from one another, these intervals preferably being smaller than the width of the second carrier strip (16).

13. Adhesive closure part according to any of the preceding claims, **characterised in that** the recesses (27) of one sequence are oriented towards the recesses (27) of the other sequence.

14. Adhesive closure part according to any of the preceding claims, **characterised in that** the recesses (27) end before the strip centre (18) of the carrier strips (10, 16) at a distance that is less than 1/8, preferably less than 1/10, of the width of the second carrier strip (16).

15. Adhesive closure part according to any of the preceding claims, **characterised in that** the recesses (27) are formed by incisions or cut-outs in the assignable strip material which penetrate the material completely.

16. Adhesive closure part according to any of the preceding claims, **characterised in that** the V-shaped recesses (27) tapering in the direction of the bending line visibly end on one side in the event of bending, until the wall portions of the two carrier strips (10, 16) delimiting the V-shaped recesses (27) come into contact with one another.

17. Adhesive closure part according to any of the preceding claims, **characterised in that**, while the assignable V-shaped recesses (27) close on one side when bending in one direction, the respective recesses (27) on the opposite side of the two carrier strips (10, 16) expand accordingly.

18. Adhesive closure part according to any of the preceding claims, **characterised in that** the weakened resistance (27) subdivides the two carrier strips (10, 16) into individual adhesive segments, which are connected to one another at the location of the weakened resistance, and **in that** the connecting means (20) extend beyond the assignable weakened resistance from adhesive segment to adhesive segment.

19. Adhesive closure part according to any of the preceding claims, **characterised in that** the first carrier strip (10), with its connecting means (20), is free of weakened resistance in a longitudinal strip between the adhesive segments.

20. Adhesive closure strip according to any of the preceding claims, **characterised in that** the recesses (27) on both sides of the strips (10, 16) have an identical design and are arranged flush to one another and are each V-shaped, the width of said V-shape reducing inwards from the outer longitudinal edge (25) and ending in a point.

21. Use of an adhesive closure part according to any of the preceding claims in a foam mould, in particular for manufacturing vehicle seat cushions, having a receiving pipe (2) in which the adhesive closure parts (6) covered with the covering film (26) can be inserted, wherein, after connecting the moulded foam to the connecting means (20), forming at least one part of the seat cushion, and, after extracting from the foam mould after removing the covering film (26), the interlocking elements (12) are exposed.

## Revendications

1. Partie de fermeture auto-agrippante, comprenant une première bande (10) support ayant des éléments (12) d'accrochage disposés sur celle-ci sur une face et comprenant une deuxième bande (16) support, qui, reliée à la à la première bande (10) support, a, sur sa face non tournée vers les éléments (12) d'accrochage, un moyen (20) de liaison, dans laquelle la deuxième bande (16) support est plus large que la première bande (10) support et est en saillie par au moins une partie (22) marginale latérale libre du bord longitudinal voisin de la première bande (10) support, et dans laquelle les deux bandes (10, 16) supports sont flexibles le long et transversalement à leur direction longitudinale,
**caractérisée**
**en ce qu'**au moins une partie (22) marginale latérale libre de la deuxième bande (16) support est pourvue d'un affaiblissement (27) de résistance, de manière à faciliter la flexion des deux bandes (10, 16) supports transversalement à leur direction longitudinale ;
**en ce que** l'affaiblissement (27) de résistance respectif de la première (10) et de la deuxième bande (16) support subdivise les éléments (12) d'accrochage de la première bande (10) support en des segments d'agrippage disposés à la manière d'îlots, qui sont orientés suivant un agencement les uns derrière les autres sur une ligne respective de flexion ;
**en ce que** les éléments (12) d'accrochage s'étendent en une bande longitudinale, en passant devant en continu les affaiblissements (27) de résistance pouvant être associés d'un segment d'agrippage à un segment d'agrippage, le long de la ligne de flexion ;
**en ce que** l'affaiblissement de résistance respectif est formé d'au moins un évidement (27) dans au moins une partie (22) marginale latérale de la deuxième bande (16) support ;
et
les évidements (27) sont constitués pareillement et possèdent une forme en V se rétrécissant du bord (25) longitudinal respectif vers l'intérieur.

2. Partie de fermeture auto-agrippante suivant la revendication 1, **caractérisée en ce que** l'affaiblissement de résistance est disposé au moins sur la partie (22) marginale latérale de la deuxième bande (16) support, dans la direction de laquelle les deux bandes (10, 16) supports sont courbées.

3. Partie de fermeture auto-agrippante suivant la revendication 1 ou 2, **caractérisée en ce que** la deuxième bande (16) support est en saillie par respectivement une partie (22) marginale latérale des deux bords longitudinaux de la première bande (10) support, et **en ce que** les deux parties (22) marginales latérales ont une même étendue de surface et sont pourvues chacune d'un affaiblissement (27) de résistance ayant le même effet.

4. Partie de fermeture auto-agrippante suivant la revendication 3, **caractérisée en ce que** l'affaiblissement de résistance respectif d'une partie (22) marginale latérale de la deuxième bande (16) support se transforme, de manière continue, en la première bande (10) support.

5. Partie de fermeture auto-agrippante suivant la revendication 3 ou 4, **caractérisée en ce que** l'affaiblissement (27) de résistance respectif de la première (10) et de la deuxième bandes (16) se termine à une distance donnée à l'avance d'une ligne de flexion, qui définit l'axe (18) longitudinal d'au moins la première bande (10) support.

6. Partie de fermeture auto-agrippante suivant l'une des revendications précédentes, **caractérisée en ce que** les deux bandes (10, 16) supports sont subdivisées en les segments d'agrippage individuels de type en îlot, qui, aux emplacements de l'affaiblissements (27) de résistance sont reliés entre eux en étant voisins, le long de la ligne de flexion, par des emplacements d'articulation ainsi formés, que tant les éléments (12) d'accrochage qu'également des moyens (20) de liaison s'étendent, au-delà des emplacements d'articulation pouvant être associés, d'un segment d'agrippage au segment d'agrippage voisin.

7. Partie de fermeture auto-agrippante suivant l'une des revendications précédentes, **caractérisée en ce que** les deux bandes (10, 16) supports sont pourvues, du côté des éléments (12) d'accrochage d'une feuille (26) de recouvrement de préférence autocollante, après le retrait de laquelle les éléments (12) d'accrochage sont mis à nu pour une prise d'accrochage.

8. Partie de fermeture auto-agrippante suivant la revendication 7, **caractérisée en ce qu'**entre la feuille (26) de recouvrement et les éléments (12) d'accrochage de la première bande (10) support est insérée une barrière (52, 53) en mousse, qui pénètre au moins en partie dans les intervalles compris entre les éléments (12) d'accrochage.

9. Partie de fermeture auto-agrippante suivant l'une des revendications précédentes, **caractérisée en ce qu'**en partant d'au moins un bord (25) longitudinal de la deuxième bande (16) support, est constituée une succession d'évidements (27), qui, en s'étendant transversalement à la direction longitudinale de la bande, s'étendent dans les deux bandes (10, 16) supports, jusqu'à proximité du milieu (18) de la bande respectivement de la ligne de flexion.

10. Partie de fermeture auto-agrippante suivant la revendication 9, **caractérisée en ce qu'**en partant des deux bords (25) longitudinaux de la deuxième bande (16) support, est formée respectivement une succession d'évidements (27).

11. Partie de fermeture auto-agrippante suivant l'une des revendications précédentes, **caractérisée en ce que** les bords de démarcation des deux évidements (27) respectifs en forme de V font entre eux un angle de 20° à 30°, de préférence de 25°.

12. Partie de fermeture auto-agrippante suivant l'une des revendications précédentes, **caractérisée en ce que** les évidements (27) sont disposés en étant équidistants les uns des autres, à des distances, qui de préférence sont plus petites que la largeur de la deuxième bande (16) support.

13. Partie de fermeture auto-agrippante suivant l'une des revendications précédentes, **caractérisée en ce que** les évidements (27) d'une succession sont orientés sur des évidements (27) de l'autre succession.

14. Partie de fermeture auto-agrippante suivant l'une des revendications précédentes, **caractérisée en ce que** les évidements (27) se terminent avant le milieu (18) des bandes (10, 16) supports à une distance, qui est plus petite que 1/8, de préférence plus petite que 1/10, de la largeur de la deuxième bande (16) support.

15. Partie de fermeture auto-agrippante suivant l'une des revendications précédentes, **caractérisée en ce que** les évidements (27) sont formés d'entailles ou de découpes dans le matériau de bande pouvant être associé, qui traversent complètement le matériau.

16. Partie de fermeture auto-agrippante suivant l'une des revendications précédentes, **caractérisée en ce que** les évidements (27) en forme de V se rétrécissant en direction de la ligne de flexion se ferment à vue d'œil d'un côté en cas de flexion, jusqu'à ce que les parties de paroi, délimitant les évidements (27) en forme de V des deux bandes (10, 16) supports viennent en contact l'une avec l'autre.

17. Partie de fermeture auto-agrippante suivant l'une des revendications précédentes, **caractérisée en ce que**, tandis que d'un côté, lors de la flexion dans une direction, les évidements (27) en forme de V pouvant être associés se ferment, les évidements (27) respectifs du côté opposé des deux bandes (10, 16) supports s'écartent d'une manière correspondante.

18. Partie de fermeture auto-agrippante suivant l'une des revendications précédentes, **caractérisée en ce que** l'affaiblissement (27) de résistance subdivise les deux bandes (10, 16) supports en des segments individuels d'agrippage, qui sont reliés entre eux à l'emplacement de l'affaiblissement de résistance, et **en ce que** le moyen (20) de liaison s'étend de segment d'agrippage à segment d'agrippage, au-delà de l'affaiblissement de résistance pouvant être associé.

19. Partie de fermeture auto-agrippante suivant l'une des revendications précédentes, **caractérisée en ce que** la première bande (10) support est, avec ses moyens (20) de liaison dans une bande longitudinale entre les segments d'agrippage, sans affaiblissement de résistance.

20. Partie de fermeture auto-agrippante suivant l'une des revendications précédentes, **caractérisée en ce que** les évidements (27) sont constitués pareillement sur les deux faces des bandes (10, 16) et sont disposés en alignement les uns avec les autres, et ont respectivement une forme en V, dont la largeur diminue du bord (25) longitudinal extérieur vers l'intérieur et débouche en une pointe.

21. Utilisation d'une partie de fermeture auto-agrippante suivant l'une des revendications précédentes, dans un moule à mousse, notamment pour la fabrication de coussins de siège de véhicule, comprenant une pipe (2) de réception, dans laquelle les parties (6) de fermeture autoagrippante peuvent être insérées en étant recouvertes de la feuille (26) de recouvrement, dans laquelle, après liaison de la mousse de moulage au moyen (20) de liaison avec formation d'au moins une partie du coussin de siège et, après démoulage hors du moule à mousse, après enlèvement de la feuille (26) de recouvrement, les éléments (12) d'accrochage sont mis à découvert.
